# EUROPÄISCHE PATENTSCHRIFT

(11) **EP 1 297 458 B1**
(45) Veröffentlichungstag und Bekanntmachung des Hinweises auf die Patenterteilung: **26.03.2008**
(21) Anmeldenummer: 01949236.2
(22) Anmeldetag: 02.06.2001
(51) Int. Cl.: G06F 17/50

(54) **VERFAHREN ZUR AUTOMATISCHEN ERSTELLUNG EINES ARBEITSPLANS**
METHOD FOR AUTOMATICALLY PREPARING A WORKING PLAN
PROCEDE POUR ETABLIR AUTOMATIQUEMENT UN PLAN DE TRAVAIL

(30) Priorität: 13.06.2000 DE 10029086
(43) Veröffentlichungstag der Anmeldung: 02.04.2003
(73) Patentinhaber: Weber, Helga, 91056 Erlangen (DE)
(72) Erfinder: Weber, Helga, 91056 Erlangen (DE)
(74) Vertreter: Gassner, Wolfgang
(86) Internationale Anmeldenummer: PCT/DE2001/002088
(87) Internationale Veröffentlichungsnummer: WO 2001/097093

(56) Entgegenhaltungen:
- EP-A- 0 992 869
- DE-A- 19 740 974
- DE-A- 19 807 343
- US-A- 5 168 441
- US-A- 5 777 877
- US-A- 5 793 638

## Beschreibung

Die Erfindung betrifft ein Verfahren zur automatischen Erstellung eines Arbeitsplans für die Herstellung eines aus mehreren Komponenten bestehenden Produkts, z.B. eines Kabelbaums. Sie betrifft ferner eine Vorrichtung zur Durchführung des Verfahrens.

Die meisten Produkte bestehen aus einer Vielzahl von Komponenten. Z.B. besteht der Kabelbaum eines Kraftfahrzeugs aus einer Vielzahl von mit unterschiedlichen Farbkennungen versehenen Kabeln. An den Kabelenden können Stecker unterschiedlicher Ausbildung angebracht sein, die ihrerseits wiederum aus Bestandteilen, wie einem Kontaktschuh und einer den Kontaktschuh umhüllenden Isolierung gebildet sind. Für jede Komponente ist die Art und die Reihenfolge der jeweiligen Arbeitsgänge festzulegen. Das Ergebnis ist ein elementspezifischer Fertigungsteilprozess. Schließlich ist die Reihenfolge der Fertigungsteilprozesse festzulegen.

Es ist allgemein bekannt, zur Herstellung eines Produkts einen Arbeitsplan zu erstellen. Der Arbeitsplan beschreibt die Art und die Reihenfolge der einzelnen zur Herstellung des Produkts erforderlichen Fertigungsteilprozesse. Die Auswahl der Fertigungsteilprozesse oder der Arbeitsgänge richtet sich nach den vorhandenen Ressourcen, z.B. Maschinen. Der Arbeitsplan hat zum Ziel, einen für das herzustellende Produkt möglichst kosten- und zeitsparenden Fertigungsprozeß anzugeben.

Die Erstellung eines Arbeitsplans erfolgt heute manuell unter Zuhilfenahme von Computerprogrammen. Dabei ist es erforderlich, einen für das jeweilige Computerprogramm spezifischen Datensatz herzustellen, der programmspezifisch die Merkmale des herzustellenden Produkts beschreibt. Dieser Vorgang erfordert erfahrenes und fachlich geschultes Personal; er ist also zeit- und kostenaufwendig. Die unter Verwendung herkömmlicher Computer-gestützter Verfahren erstellten Arbeitspläne sind häufig unpräzise. Dadurch erhöhen sich die Herstellungskosten für das Produkt.

Aus der DE 198 07 343 ist ein Verfahren für die Planung der Fertigung eines Formwerkzeugsatzes für eine Preßmaschine bekannt. Dabei werden Daten des zu fertigenden Produkts mit Daten von zuvor geplanten Produkten verglichen werden. In Abhängigkeit der Ähnlichkeit der verglichenen Daten werden dann geeignete Fertigungsschritte ausgewählt. Das Verfahren hat den Nachteil, daß immer dieselben Fertigungsmittel vorgehalten werden müssen. Sofern sich die Fertigungsmittel ändern, stimmen u.U. auch die vorgegebenen Ähnlichkeitsbeziehungen nicht mehr.

Nach dem Stand der Technik ist es auch bekannt, neue Produkte am Computer unter Verwendung von CAD-Programmen zu konstruieren. Die mittels solcher Programme erstellten CAD-Datensätze eignen sich z.B. zur Steuerung computergesteuerter Maschinen. Unter Verwendung der CAD-Datensätze ist es möglich, zur Herstellung eines Prototypen Komponenten des Produkts, z.B. durch spanabhebende Bearbeitung, unmittelbar herzustellen.

Die US 5,249,135 beschreibt ein computergestütztes Verfahren zur Herstellung einer Komponente eines Produkts. Dabei werden auf der Grundlage eines Teilemodells die Fertigungsschritte einer Komponente geplant. Das bekannte Verfahren eignet sich nicht zur automatischen Erstellung eines Arbeitsplans für die Herstellung eines aus mehreren Komponenten bestehenden Produkts.

Aufgabe der Erfindung ist es, die Nachteile nach dem Stand der Technik zu beseitigen. Es soll insbesondere ein Verfahren zur Auswahl und Bestimmung der Reihenfolge von Arbeitsgängen angegeben werden, welches einfach und kostengünstig durchführbar ist. Weiteres Ziel ist es, die Fertigungskosten für ein Produkt zu senken.

Diese Aufgabe wird durch die Merkmale der Ansprüche 1 und 9 gelöst. Zweckmäßige Ausgestaltungen ergeben sich aus den Merkmalen der Ansprüche 2 bis 8.

Nach Maßgabe der Erfindung ist ein Verfahren zur automatischen Erstellung eines Arbeitsplans für die Herstellung eines aus mehreren Komponenten bestehenden Produkts, z.B. eines Kabelbaums, mit folgenden Schritten vorgesehen:
a) Bereitstellen eines Produktdatenmodells des Produkts, in dem jede Komponente durch einen ein Klassifizierungsmerkmal enthaltenden Teildatensatz beschrieben ist,
b) Bereitstellen einer Datenbank, wobei die darin enthaltenen Datensätze unter dem Klassifizierungsmerkmal in Klassen gegliedert sind, wobei jede Klasse eine oder mehrere Auswahlregeln enthält, wobei jeder Auswahlregel ein mit einem Index versehener Fertigungsteilprozeß zugeordnet ist, und jeder Fertigungsteilprozeß einen oder mehrere Arbeitsgänge enthält,
c) automatische Auswahl der für die Komponente zutreffenden Klasse anhand des Klassifizierungsmerkmals,
d) automatische Auswahl eines für die Herstellung der Komponente geeigneten Fertigungsteilprozesses mittels der Auswahlregel,
e) automatische Festlegung der Abfolge der Fertigungsteilprozesse anhand des jeweiligen Index.

### Definitionen

Arbeitsplan: Schrittweise Beschreibung des Fertigungsprozesses für ein Produkt. Der Arbeitsplan besteht aus aufeinanderfolgenden Fertigungsteilprozessen.

Produkt: Körperlicher Gegenstand der aus mehreren Komponenten besteht.

CAD-Datenmodell: Datenmodell welches zur Konstruktion des Produkts mittels eines CAD-Programms erstellt worden ist. Das CAD-Datenmodell besteht aus Teildatensätzen, welche die Komponenten des Produkts beschreiben.

Produktdatenmodell: Datenmodell, in dem den Teildatensätzen eines CAD-Datenmodells Merkmale zugeordnet sind, die für den Fertigungsprozeß relevant sind, d.h. die Auswahl eines geeigneten Fertigungsteilprozesses und/oder die Errechnung der voraussichtlichen Bearbeitungszeiten beeinflussen.

Datenbank: Wissensbasis; sie besteht aus Datensätzen, welche jeweils eine Klasse bilden. Die Datensätze umfassen die Auswahlregel, die möglichen Bearbeitungsschritte, die Rechenvorschriften zur Errechnung der Bearbeitungszeiten und dgl.

Klassifizierungsmerkmal: Merkmal, welches die Zuordnung eines Teildatensatzes zu einer vorgegebenen Klasse ermöglicht.

Index: Ordnungsnummer zur Festlegung der Abfolge der Teilfertigungsprozesse im Arbeitsplan.

Fertigungsteilprozess: Abfolge von Arbeitsgängen, wobei jedem Arbeitsgang ein eindeutiger Schlüssel und/oder ein Text, ein Betriebsmittel und die Fertigungszeit zugeordnet sind.

Das erfindungsgemäße. Verfahren ermöglicht es, auf einfache und schnelle Art einen optimierten Arbeitsplan anzugeben. Die Fertigungskosten für das Produkt können damit gesenkt werden. Es können mittels des erfindungsgemäßen Verfahrens schnell Arbeitspläne für mehrere Fertigungsstandorte erstellt und durch einen Vergleich ermittelt werden, an welchem der Fertigungsstandorte das Produkt am kostengünstigsten herstellbar ist.

Das Klassifizierungsmerkmal kann ein materialspezifisches Merkmal sein. Ein materialspezifisches Merkmal wird insbesondere dann als Klassifizierungsmerkmal gewählt, wenn das Produkt aus unterschiedlichen Materialien besteht. Sofern das Produkt aus einem Material gebildet ist, welches mit ein und derselben Maschine bearbeitbar ist, können auch andere Merkmale z.B. geometrische Merkmale, als Klassifizierungsmerkmale herangezogen werden.

Mittels der Auswahlregel werden vorteilhafterweise im Teildatensatz enthaltene geometrische Daten und Merkmale verarbeitet. Das ermöglicht eine besonders exakte Vorausberechnung der für den jeweiligen Arbeitsgang aufzuwendenden Arbeitszeit.

Zweckmäßigerweise werden zur Auswahl eines geeigneten Fertigungsteilprozesses die in der Datenbank hinterlegten Fertigungsteilprozesse hierarchisch mit abnehmender Komplexität nacheinander geprüft. Das verkürzt die Rechenzeit und macht das Verfahren besonders effizient.

Jeder Fertigungsteilprozeß kann mehrere Arbeitsgänge umfassen und mittels für jeden der Arbeitsgänge vorgegebenen Daten oder einer Rechenvorschrift kann der Zeitaufwand für den Arbeitsgang errechnet werden.

Nach einem weiteren Ausgestaltungsmerkmal ist jedem Fertigungsteilprozeß mindestens ein Arbeitsmittel und ein Text zugeordnet. Als Ergebnis kann auf einem Bildschirm, als Datei oder in gedruckter Form ein Arbeitsplan ausgegeben werden, in dem die Abfolge der ermittelten Fertigungsteilprozesse, die für die Fertigungsteilprozesse erforderlichen Arbeitsmittel sowie der für den jeweiligen Fertigungsteilprozeß erforderlichen Zeitaufwand ausgewiesen ist.

Besonders vorteilhaft ist es, aus den ermittelten Fertigungsteilprozessen Transaktionen automatisch abzuleiten, welche die manuelle Erstellung eines Arbeitsplanes mit Hilfe einer herkömmlichen betriebswirtschaftlichen Software simulieren.

Unter einer herkömmlichen betriebswirtschaftlichen Software werden Produktplanungs- und -steuerungs-Systeme verstanden. Solche Systeme bzw. Computersoftware wird z.B. von der Firma SAP AG vertrieben. Es wird zur Erleichterung des Anwenders solcher Systeme eine Vergleichsmöglichkeit geschaffen. Aufwendige Umschulungen oder Instruktionen zur Bedienung des erfindungsgemäßen Verfahrens entfallen.

Die Erfindung betrifft ferner eine Vorrichtung zur Datenverarbeitung hergerichtet zur Durchführung des erfindungsgemäßen Verfahrens. Es kann sich dabei um einen herkömmlichen Personalcomputer handeln, welcher mit einem Programm zur automatisierten Durchführung des erfindungsgemäßen Verfahrens versehen ist.

Nachfolgend wird ein Ausführungsbeispiel der Erfindung anhand der Zeichnung näher erläutert. Es zeigen:
- Fig. 1: ein erstes Flußdiagramm und
- Fig.2: ein zweites Flußdiagramm.

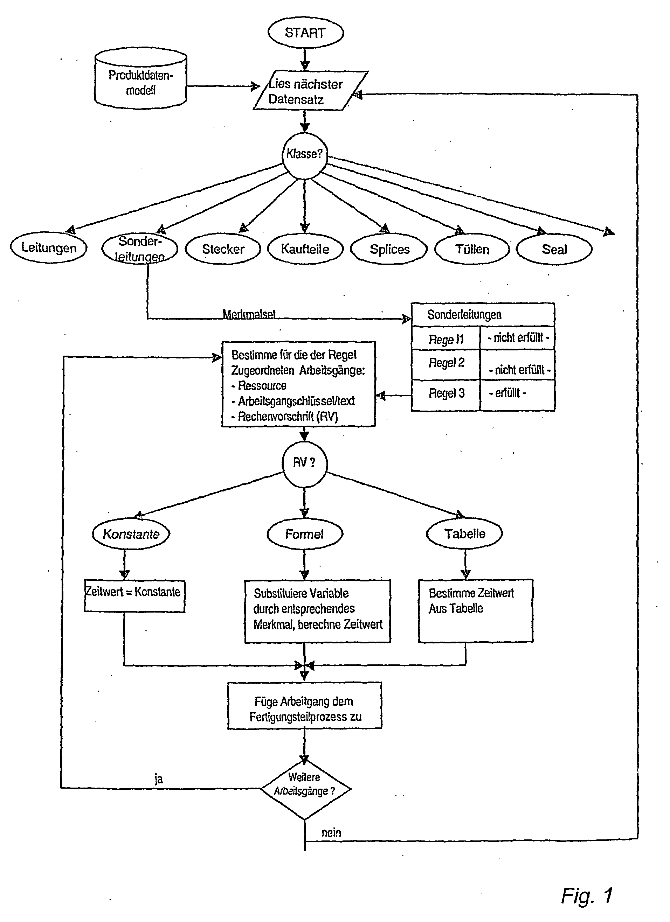

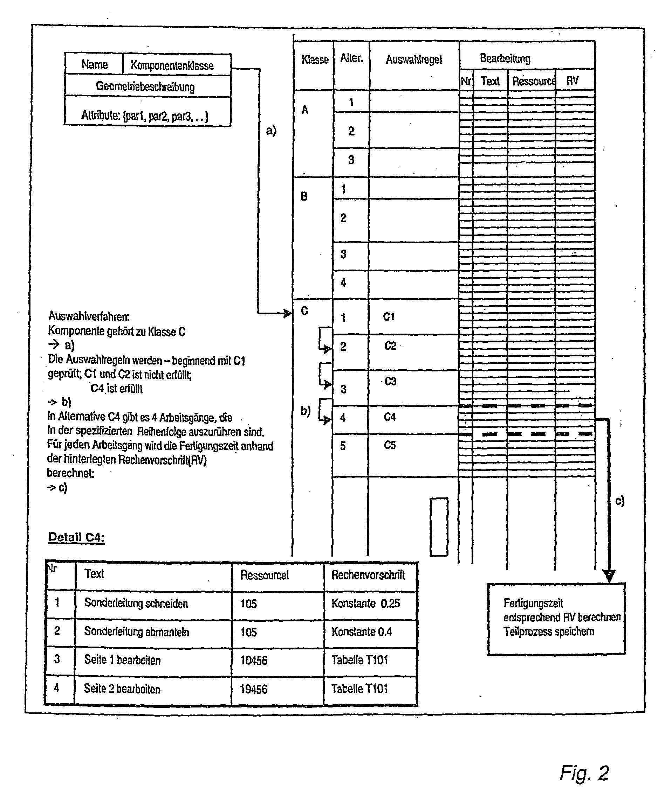

Die in den Fig.1 und 2 gezeigten Flußdiagramme beschreiben beispielhaft die automatische Erstellung eines Arbeitsplans für die Herstellung eines Kfz-Kabelbaums.

Bereitgestellt wird ein Produktdatenmodell eines Kfz-Kabelbaums. Das Produktdatenmodell enthält für jede Komponente einen Teildatensatz, wobei jedem Teildatensatz Merkmale zugeordnet sind. Die Teildatensätze werden mit den zugeordneten Merkmalen sequenziell ausgelesen und verarbeitet.

Dazu hat es sich im vorliegenden Beispiel als zweckmäßig erwiesen, eine in folgende Klassen gegliederte Datenbank bereitzustellen:
Leitungen
Sonderleitungen
Stecker
zugekaufte Teile bzw. Kaufteile
Splices
Tüllen
Dichtungen (= Seal) u. dgl.

Die Zuordnung des ausgewählten Teildatensatzes zu einer der Klassen erfolgt hier aufgrund eines bearbeitungsspezifischen Merkmals. Die Klasse "Leitungen" enthalten als bearbeitungsspezifisches Merkmal z.B. das Merkmal "Schneiden". Die Auswahl zwischen den Klassen "Leitungen" und "Sonderleitungen" wird über ein weiteres Merkmal, z.B. "Widerstand" oder "Durchmesser" durchgeführt.

Anschließend werden die der jeweiligen Klasse zugeordneten Auswahlregeln mit dem Teildatensatz verglichen. Es wird geprüft, ob mit dem Teildatensatz die Auswahlregel erfüllt ist oder nicht. Falls die Auswahlregel nicht erfüllt ist, wird die nächste - einfacher strukturierte - Auswahlregel geprüft. Sobald eine Auswahlregel gefunden worden ist, welche der Teildatensatz erfüllt, wird die zugehörige Folge von Arbeitsgängen ausgewählt. Mittels der im Teildatensatz enthaltenen geometrischen Daten wird sodann für jeden Arbeitsgang die dafür erforderliche Arbeitszeit errechnet. Dabei wird auf vorgegebene Rechenvorschriften für jedes Arbeitsmittel bzw. jede Ressource zurückgegriffen. Bei den Rechenvorschriften kann es sich im einfachsten Fall um eine Konstante, eine Formel oder eine Tabelle handeln.

Als Ergebnis wird ein in einzelne Arbeitsgänge aufgeschlüsselter Fertigungsteilprozeß ausgegeben. Dabei wird das jeweils zu verwendende Arbeitsmittel sowie die benötigte Arbeitszeit angegeben.

Es werden nacheinander sämtliche zur Herstellung des Produkts erforderlichen Fertigungsteilprozesse ermittelt. Die Fertigungsteilprozesse mit einem Index versehen. Aufgrund des Indexes erfolgt abschließend eine Ordnung der Fertigungsteilprozesse. Die geordneten Fertigungsteilprozesse ergeben den Arbeitsplan.

In Fig.2 ist nochmals die Auswahl eines Fertigungsteilprozesses im einzelnen gezeigt. Aufgrund eines im Produktdatenmodell, welches hier aus "Name", "Komponentenklasse", "Geometriebeschreibung" und "Attributen" besteht, enthaltenen Merkmals, erfolgt die Zuordnung zu einer Klasse, hier der Klasse "C" (Schritt lit. a). Anschließend werden die der Klasse zugehörigen Auswahlregeln C1, C2, C3 usw. geprüft (Schritt lit. b). Im konkreten Beispiel ist für den geprüften Teildatensatz die Auswahlregel C4 erfüllt. Dieser Auswahlregel ist ein Fertigungsteilprozeß mit vier Arbeitsgängen zugeordnet. Es wird nun für jeden Arbeitsgang die Fertigungszeit anhand einer dafür hinterlegten Rechenvorschrift berechnet.

Die Arbeitsgänge, die zu verwendende Ressource sowie die Rechenvorschrift sind in der Tabelle links unten in Fig.2 nochmals im einzelnen dargestellt. Es ist ersichtlich, daß der Arbeitsgang Nr. 1 die Tätigkeit "Sonderleitung schneiden" betrifft, wobei die Ressource Nr. "105" zum Einsatz kommt. Für den Vorgang des Schneidens ist als Rechenvorschrift eine konstante "0,25" zur Berechnung der erforderlichen Arbeitszeit vorgesehen.

## Patentansprüche

1. Verfahren zur automatischen Erstellung eines Arbeitsplans für die Herstellung eines aus mehreren Komponenten bestehenden Produkts, z.B. eines Kabelbaums, mit folgenden Schritten:
a) Bereitstellen eines Produktdatenmodells des Produkts, in dem jede Komponente durch einen ein Klassifizierungsmerkmal enthaltenden Teildatensatz beschrieben ist,
b) Bereitstellen einer Datenbank, wobei die darin enthaltenen Datensätze unter dem Klassifizierungsmerkmal in Klassen gegliedert sind, wobei jede Klasse eine oder mehrere Auswahlregeln enthält, wobei jeder Auswahlregel ein mit einem Index versehener Fertigungsteilprozesse zugeordnet ist, und jeder Fertigungsteilprozeß einen oder mehrere Arbeitsgänge enthält,
c) automatische Auswahl der für die Komponente zutreffenden Klasse anhand des Klassifizierungsmerkmals,
d) automatische Auswahl eines für die Herstellung der Komponente geeigneten Fertigungsteilprozesses mittels der Auswahlregel,
e) automatische Festlegung der Abfolge der Fertigungsteilprozesse anhand des jeweiligen Index.

2. Verfahren nach Anspruch 1, wobei das Klassifizierungsmerkmal ein materialspezifisches Merkmal ist.

3. Verfahren nach einem der vorhergehenden Ansprüche, wobei mittels der Auswahlregel im Teildatensatz enthaltene geometrische Daten und Merkmale verarbeitet werden.

4. Verfahren nach einem der vorhergehenden Ansprüche, wobei zur Auswahl eines geeigneten Fertigungsteilprozesses die in der Datenbank hinterlegten Fertigungsteilprozesse hierarchisch mit abnehmender Komplexität nacheinander geprüft werden.

5. Verfahren nach einem der vorhergehenden Ansprüche, wobei jeder Fertigungsteilprozeß mehrere Fertigungsschritte umfaßt und wobei mittels für jeden der Arbeitsschritte vorgegebenen Daten oder einer Rechenvorschrift der Zeitaufwand für den Arbeitsschritt errechnet wird.

6. Verfahren nach einem der vorhergehenden Ansprüche, wobei jedem Fertigungsteilprozeß mindestens ein Arbeitsmittel und ein Text zugeordnet wird.

7. Verfahren nach einem der vorhergehenden Ansprüche, wobei als Ergebnis auf einem Bildschirm, als Datei oder in gedruckter Form ein Arbeitsplan ausgegeben wird, in dem die Abfolge der ermittelten Fertigungsteilprozesse, die für die Fertigungsteilprozesse erforderlichen Arbeitsmittel sowie der für den jeweiligen Fertigungsteilprozeß erforderlichen Zeitaufwand ausgewiesen ist.

8. Verfahren nach einem der vorangehenden Ansprüche, wobei aus den ermittelten Fertigungsteilprozessen Transaktionen automatisch abgeleitet werden, welche die manuelle Erstellung eines Arbeitsplanes mit Hilfe einer herkömmlichen betiebswirtschaftlichen Software simulieren.

9. Vorrichtung zur Datenverarbeitung hergerichtet zur Durchführung des Verfahrens nach einem der vorhergehenden Ansprüche.

## Claims

1. A method for automatically preparing a working plan for producing a product comprising a number of components, for example a wiring harness, with the following steps:
a) providing a product data model of the product, in which each component is described by a partial data set containing a classification characteristic,
b) preparing a database, the data sets contained therein being divided into classes according to the classification characteristic, each class containing one or more selection rules, each selection rule being assigned a partial manufacturing process provided with an index, and each partial manufacturing process containing one or more working operations,
c) automatically selecting the class applying to the component on the basis of the classification characteristic,
d) automatically selecting a partial manufacturing process suitable for producing the component by means of the selection rule,
e) automatically establishing the sequence of the partial manufacturing processes on the basis of the respective index.

2. The method as claimed in claim 1 wherein the classification characteristic is a material-specific characteristic.

3. The method as claimed in one of the preceding claims wherein geometrical data and characteristics contained in the partial data set are processed by means of the selection rule.

4. The method as claimed in one of the preceding claims wherein the partial manufacturing processes stored in the database are checked one after the other hierarchically with decreasing complexity for the selection of a suitable partial manufacturing process.

5. The method as claimed in one of the preceding claims wherein each partial manufacturing process comprises a number of manufacturing steps and wherein the expenditure of time for the working step is calculated by means of data or a computing specification predetermined for each of the working steps.

6. The method as claimed in one of the preceding claims wherein each partial manufacturing process is assigned at least one working means and a text.

7. The method as claimed in one of the preceding claims wherein a working plan showing the sequence of the ascertained partial manufacturing processes, the working means required for the partial manufacturing processes and the expenditure of time required for the respective partial manufacturing process is output as the result on a screen, as a file or in printed form.

8. The method as claimed in one of the preceding claims wherein transactions which simulate the manual preparation of a working plan with the aid of conventional business management software are derived automatically from the ascertained partial manufacturing processes.

9. A device for data processing, set up for carrying out the method as claimed in one of the preceding claims.

## Revendications

1. Procédé pour l'élaboration automatique d'un plan de travail pour la production d'un produit comprenant plusieurs composants, par exemple d'un faisceau de câbles, selon les étapes suivantes :
a) mise à disposition d'un modèle de données produit du produit dans lequel chaque composant est décrit par un enregistrement de données partiel comprenant une caractéristique de classification,
b) mise à disposition d'une base de données où les enregistrements de données qui y sont contenus sont regroupés en classes dans la caractéristique de classification, où chaque classe comprend une ou plusieurs règles de sélection, où un processus partiel de fabrication muni d'un index est attribué à chaque règle de sélection et chaque processus partiel de fabrication comprend une ou plusieurs opérations,
c) sélection automatique de la classe correspondant aux composants à l'aide de la caractéristique de classification,
d) sélection automatique d'un processus partiel de fabrication adapté à la production des composants au moyen de la règle de sélection,
e) définition automatique de l'ordre des processus partiels de fabrication à l'aide de l'index respectif.

2. Procédé selon la revendication 1, où la caractéristique de classification est une caractéristique spécifique au matériau.

3. Procédé selon l'une des revendications précédentes, où les données géométriques et caractéristiques comprises dans l'enregistrement de données partiel sont traités au moyen de la règle de sélection.

4. Procédé selon l'une des revendications précédentes, où les processus partiels de fabrication enregistrés dans la base de données sont contrôlés successivement, hiérarchiquement par ordre décroissant de complexité pour la sélection d'un processus partiel de fabrication approprié.

5. Procédé selon l'une des revendications précédentes, où chaque processus partiel de fabrication comprend plusieurs étapes de fabrication et où le temps consacré à l'opération est calculé au moyen des données prédéfinies pour chacune des opérations ou d'une règle de calcul.

6. Procédé selon l'une des revendications précédentes, où au moins un moyen de travail et un texte sont attribués à chaque processus partiel de fabrication.

7. Procédé selon l'une des revendications précédentes, où un plan de travail est sorti en tant que résultat sur un écran, en tant que fichier ou sous forme imprimée en présentant l'ordre des processus partiels de fabrication déterminés, les moyens de travail nécessaires aux processus partiels de fabrication ainsi que le temps consacré nécessaire au processus partiel de fabrication respectif.

8. Procédé selon l'une des revendications précédentes, où des transactions sont dérivées automatiquement des processus partiels de fabrication déterminés qui simulent l'élaboration manuelle d'un plan de travail à l'aide d'un logiciel de gestion standard.

9. Dispositif pour le traitement de données aménagé pour l'exécution du procédé selon l'une des revendications précédentes.
